# EUROPEAN PATENT APPLICATION

(11) **EP 4 751 556 A2**
(43) Date of publication of application: **03.06.2026**
(21) Application number: 26170535.4
(22) Date of filing: 08.06.2016
(51) Int. Cl.: A01G 9/26

(54) **METHODS AND SYSTEMS FOR GROWING PLANTS**

(30) Priority: 08.06.2015 US 201514733882; 20.05.2016 US 201662339587 P
(62) Divisional of application: 16808148.7
(71) Applicant: Soli Organic Inc., Harrisonburg, VA 22802 (US)
(72) Inventor: HOFFMAN, Robert L., Virginia, Rhoadsville, 22542 (US)
(74) Representative: Maiwald GmbH

(57) **Abstract**

The invention relates to methods and systems for growing plants by initiating growth of a plant in a first growing facility and finishing the growth of the plant in a second growing facility. The invention also relates to methods of growing plants by exposing a plant to a light emitting diode after a period of initial growth without LED exposure. The invention also relates to methods of growing plants utilizing one or more of plug grow rooms and nursery grow rooms.

## Description

### FIELD OF THE INVENTION

The invention relates to methods and systems for growing plants by initiating growth of a plant in a first growing facility and finishing the growth of the plant in a second growing facility. The invention also relates to methods of growing plants by exposing a plant to a light emitting diode after a period of initial growth without LED exposure.

### BACKGROUND

The standard model of growing a plant for production (e.g., single greenhouse culinary herb and leafy greens production) has thus far been to produce plants at a single growing facility and then cool and ship perishable product as quickly as possible to the customer. The limitations of this method are numerous as time is of the essence in dealing with highly perishable products. Plants are traditionally harvested at a field temperature and subsequently taken to a packing location. There, the product is cooled. This is a slow process and causes a substantial lag time between harvest, packaging, and shipping to a customer. However, if the process is rushed, the herbs stand the risk of forming condensation on the leaves, which increases the chances of cold damage and post-harvest pathogens in the supply chain, both of which, ultimately decrease product shelf-life. With this traditional model, there is also a longer lag time between receipt of customer orders and delivery to customer due to the long distances the plants must be transported after ordering, harvesting, cooling, and packaging. This long lag time reduces the shelf life of the plant upon arrival to the customer. Greenhouse grown potted plants (e.g., herbs) are seeded and or transplanted and grown directly for harvest in a period of 20-60 days, or 30-45 days. At the point of harvest for sale, the products are packaged and then move directly to an area for customer order assembly for boxing and shipping on trucks outbound to the customer wherever that customer may be located. Due to the highly perishable nature of the product, time and distance variances in the supply chain results in disparate product quality and shelf life variance for the end user in retail in order to provide regional and national service. Supply chain uncertainty and planning variables compound the inefficiencies created by a single growing facility. Supply chain productivity additionally requires a large area for any given number of plants being grown, with added cost to the producer.

Herbs are used for culinary purposes, in manufacturing and food industries. A major commercial form of culinary herbs is the dried product, in part because herbs in this form are easy to transport, store and market. A fairly recent development in herb production is fresh herbs, which can be sold in pots or in a harvested bundle. The herbs will provide fresh material to households and, when sold in a pot, an attractive ornamental plant. While fresh herbs are considered more flavorful and superior in quality to dried herbs, widespread commercialization of fresh pot herbs has been restricted due to high perishability and a relatively short shelf life. Methods to increase shelf life, mainly comprise some type of cold storage and/or cold transportation or alternatively by using chemical- or biological agents to improve the general resistance or quality of the herb. Cold storage and/or cold transportation is a method with which to reduce the metabolic activity of a plant, as the rate of biochemical reactions such as respiration in plants is reduced. However, some herbs such as basil and watercress cannot withstand low temperatures as their leaves will darken, discolor, and eventually collapse. Additionally, the aromatic oils can be affected, having a negative impact on the flavor. For these reasons for example basil should not be chilled below 15-10°C, as is common with cold storage and/or cold transport of fresh herbs. Consequently, there are also methods to more specifically address the cold resistance, for example using temperature protective hoods, chemical- or biological agents or by cold hardening the plants during production.

Industrial greenhouse growing of plants includes the steps of sowing and allowing the seed to germinate until it has become a seedling. The duration depends on the plant. The seedling can then generally be put in a nursery area, where the root system is allowed to develop under optimal conditions for this stage of the plant's development, including for example, controlled irrigation. The plant seedling can be allowed to grow in the nursery area for some period of time, which can be 10-14 days, after which the herb can be moved to another area or gully system within the same growing facility. In the gully system the plants can take as much water and fertilizer as needed from below, where a nourishing mix of this is provided.

The plants can be positioned optimally relative each other in the gully system, so that herbs can grow without blocking or being blocked until they are ready for harvest. This phase can take 20-40 days. The total production time can be an average of four to seven weeks until the conventionally grown, fresh plant (e.g., herb pot) is ready to be shipped, however this varies depending on the type of plant, the season, and ambient conditions both inside and outside the growing facility such as a greenhouse. The preferred harvesting time can be in part based on studies of at what maturity stage the flavor or other characteristic of the plant (e.g., herb) is preferable. The preferred harvesting time can also include factors such as the aesthetic aspect of the size of the herb, wherein the preferences can vary with the intended market. Plants such as fresh herbs can have a short shelf life of 6-7 days if delivered undamaged to the store. The short shelf life and the sensibility to cold temperatures show that fresh herbs have a relatively high waste rate. Basil, in particular, has a high waste rate.

There continues to be a need for improved plant production processes and improved plant products.

### BRIEF SUMMARY OF THE INVENTION

The invention is directed to a method of growing a plant, comprising: growing a plant from a seed, seedling, or immature plant in a first growing facility; transporting the plant to a second growing facility; and exposing the plant to a light emitting diode (LED) in the second growing facility. The invention is also directed to a system for growing a plant, comprising: a first growing facility comprising an area configured to initiate growth of a plant or seed; a second growing facility comprising an area configured to allow finishing of the growth of the plant, wherein the finishing comprises exposing the plant to a light emitting diode (LED). The invention is further directed to a method of growing a plant, comprising: exposing a plant to a light emitting diode (LED) after a period of initial growth without LED exposure, wherein the LED exposure comprises a blue light having a wavelength between 440 nm to 495 nm and a red light having a wavelength between 615 nm to 750 nm.

The method or system can further comprise exposing the plant to an LED in the first growing facility. The method or system can further comprise finishing the growth of the plant in the second growing facility. The first growing facility can be a greenhouse, farm, warehouse, or industrial agricultural complex. In some embodiments, the plant is grown for 10 to 60 days in the first growing facility. In some embodiments, the transporting can be by a truck, tray, cart, bin, or conveyor. In some embodiments, the second growing facility is a warehouse, pack house, or distribution center. In some embodiments, the second growing facility comprises an LED growth chamber as a satellite plant finishing room. In some embodiments, the LED emits a wavelength between 440 nm to 495 nm and a wavelength between 615 nm to 750 nm. In some embodiments, the LED exposure comprises 10% to 30% blue light and 70% to 90% red light. In some embodiments, the LED exposure further comprises 1% to 10% green light. In some embodiments, the LED exposure further comprises yellow and orange light. In some embodiments, the LED exposure further comprises 1% to 10% white light.

In some embodiments, the exposing of the plant to the LED is for 12-24 hours followed by a 1-12 hour dark period per day.

In some embodiments, the finishing the growth of the plant in the second growing facility is for 1 to 30 days.

In some embodiments, the transportation apparatus transports the plant from the first growing facility to the second growing facility. In some embodiments, the plants from the first growing facility are provided to multiple second growing facilities. In some embodiments, the transportation apparatus is a truck, tray, cart, bin, or conveyor.

In some embodiments, the method or system comprises exposing a plant to a light emitting diode (LED) after a period of initial growth without LED exposure, wherein the LED exposure comprises a blue light having a wavelength between 440 nm to 495 nm and a red light having a wavelength between 615 nm to 750 nm. In some embodiments, the LED exposure comprises 10% to 30% blue light and 70% to 90% red light. In some embodiments, the LED exposure further comprises 1% to 10% green light. In some embodiments, the LED exposure further comprises yellow and orange light. In some embodiments, the LED exposure further comprises 1% to 10% white light.

In some embodiments, the LED exposure is in a first growing facility, a second growing facility, or both.

In some embodiments, the first growing facility includes one or more plug grow rooms, one or more nursery grow rooms, or combinations thereof.

In some embodiments, the second growing facility includes one or more of: a plug grow room, a nursery grow room, or combinations thereof.

### BRIEF DESCRIPTION OF THE DRAWINGS/FIGURES

The disclosure will be readily understood by the following detailed description in conjunction with the accompanying drawings, wherein like reference numerals designate like structural elements, and in which:
FIG. 1 shows a representative comparison between plants that were produced according to a conventional method (two plants on the left side) and plants that were produced using the invention (two plants on the right side).
FIG. 2A shows a front perspective view of a stall according to some embodiments.
FIG. 2B shows a front perspective view of a stall according to some embodiments.
FIG. 2C shows a shows a front perspective view of a cart and stall system according to some embodiments.
FIG. 3 shows a shows a rear perspective view of a cart and stall system including an irrigation system according to some embodiments.

### DETAILED DESCRIPTION OF THE INVENTION

As used herein, ranges are inclusive of the end points, and "between" includes the end points of the ranges. As used herein, "about" includes values within +/-10%. The inventions disclosed herein are also intended to include embodiments encompassing values of "about" any of the specific values disclosed herein.

The methods and systems of the invention produce a far superior product, is fully sustainable and operationally efficient. Moreover, these methods and systems change completely the prior model which dictated a need for full, single growing facility regional greenhouses in order to grow, pack and deliver fresh plants (e.g., culinary herbs). Out of first growing facility, in embodiments it will now be possible to produce and deliver regionally grown plants such as culinary herbs over a wide difference with the same freshness and unmatched quality regardless of distance and or location. Advantageously, this agile supply chain methodology can increase overall output, decrease overhead, and increase planning certainty on both the supply and demand sides of the business.

Advantageously, the methods and systems reduce cooling time for the plants and mitigates the decrease in shelf-life as well. Embodiments of these methods and systems result in significantly decreased transportation costs due to the consolidation of loads being shipped to a same geographic region. These methods and systems make it possible to hold plants, in remote locations, without decreasing the quality of the plant. The quality of the plants is significantly increased by these methods and systems, and results in decreased product shrinkage on the production, transport and store levels. Plants grown with these methods or systems in general have been shown to have improved color, stem thickness, height, certain aromatic oil content, chlorophyll content, and certain vitamin or antioxidant content. Qualitatively, these plants exhibit increased flavor. Other improvements observed include thicker and darker green leaves, thicker and stronger stems, increased aromatics, increased cold resistivity, better shelf life, and decreased product shrinkage. These improvements in plant quality indicators, coupled with reduced cooling times and improved shelf life.

The invention is directed to a method of growing a plant, comprising: growing a plant from a seed, seedling, or immature plant in a first growing facility; transporting the plant to a second growing facility; and exposing the plant to a light emitting diode (LED) in the second growing facility. The invention is also directed to a system for growing a plant, comprising: a first growing facility comprising an area configured to initiate growth of a plant or seed; a second growing facility comprising an area configured to allow finishing of the growth of the plant, wherein the finishing comprises exposing the plant to a light emitting diode (LED). In some embodiments, the methods and systems further comprise exposing the plant to an LED in the first growing facility.

The invention is further directed to a method of growing a plant, comprising: exposing a plant to a light emitting diode (LED) after a period of initial growth (a seed, seedling, or immature plant) without LED exposure, wherein the LED exposure comprises a blue light having a wavelength between 440 nm to 495 nm and a red light having a wavelength between 615 nm to 750 nm. In some embodiments, the LED exposure is in a first growing facility, a second growing facility, or both. The method or system can further comprise finishing the growth of the plant in the second growing facility.

In some embodiments, the plant is grown for 10 to 60 days in the first growing facility. The transporting can be by a truck, tray, cart, bin, or conveyor. The second growing facility can be a warehouse, pack house, or distribution center. The second growing facility can contain an LED growth chamber as a satellite plant finishing room. In some embodiments, the finishing of the growth can be for 1 to 30 days.

In some embodiments, the exposing of the plant to the LED is for 12 hours to 23 hours followed by a dark period of 1 hour to 12 hours per day. In some embodiments, the exposing of the plant to the LED is for 12, 13, 14, 15, 16, 17, 18, 19, 20, 21, 22, or 23 hours followed by a 1, 2, 3, 4, 5, 6, 7, 8, 9, 10, 11, or 12 hour dark period in a total of 24 hours. In some embodiments, the exposing of the plant to the LED is for about 15-20 hours followed by a dark period of about 4-9 hours in a total of 24 hours. In some embodiments, the exposing of the plant to the LED is for 18 hours followed by a dark period of 6 hours.

In some embodiments, a plant in a satellite grow room is monitored and sub-irrigated as needed, e.g., each day. In some embodiments, the sub-irrigation comprises the introduction of a basic fertilizer. Time spent in the satellite plant growing rooms may vary by plant variety. In some embodiments, the plant is held in a finishing room for about 4 to 5 days at a temperature of about 64 to 72 °F and a relative humidity of about 40 to 70%. The plant can then be harvested, for example, into a sleeve and tray.

The invention can further comprise a transportation apparatus, wherein the transportation apparatus transports the plant from the first growing facility to the second growing facility. The plants from the first growing facility can be provided to multiple second growing facilities. The transportation apparatus can be a truck, tray, cart, bin, or conveyor.

The invention is further directed to a method or system comprising exposing a plant to a light emitting diode (LED) after a period of initial growth without LED exposure, wherein the LED exposure comprises a blue light having a wavelength between 440 nm to 495 nm and a red light having a wavelength between 615 nm to 750 nm. In some embodiments, the LED exposure comprises a blue light having a wavelength between 440 nm to 495 nm and a red light having a wavelength between 615 nm to 710 nm. In some embodiments, the LED exposure comprises exposure of the plant to wavelengths of 440-750 nm. In some embodiments, the LED exposure comprises exposure of the plant to wavelengths of 440-710 nm. The LED exposure can comprise 10% to 30% blue light and 70% to 90% red light, further comprise 1% to 10% green light, further comprise yellow and orange light, and/or further comprise 1% to 10% white light.

In some embodiments, the first growing facility can be a greenhouse, farm, warehouse, or industrial agricultural complex. The first growing facility can be one of a plurality of first growing facilities. The first growing facility can be generally centrally located with respect to at least one second growing facility. The second growing facility can be referred to as a satellite facility and include satellite plant finishing rooms. The first growing facility can be partially or fully automated. In some embodiments, the first growing facility can include areas configured to initiate growth of a plant. In some embodiments, the first growing facility can include a greenhouse to seed, transplant and grow plants (e.g., potted herbs) to an immature state of growth. In some embodiments, the plant is grown for 10 days to 60 days, 20 days to 40 days, or 25 days to 35 days in the first growing facility. The first growing facility can be configured to increase the throughput of growing the plants, which can increase total output of plants by 10% to 70%.

In some embodiments, the first growing facility comprises separate growing zones, for example, one or more controlled environment plug grow rooms, one or more nursery grow rooms, or one or more of each. This is in contrast to conventional plug greenhouses and nursery greenhouses, which do not include such separate growing zones in which the plants are exposed to LED light. The term "grow room," as used herein, can include LED growth chambers. Thus, a grow room can comprise an area where LED light is applied to the plant or germinating seed, as discussed above. As used herein, "plug," refers to a small-sized seedling grown in trays (e.g., filled with a peat, soil, or compost substrate, for example), including young plants raised in small, individual cells, ready to be transplanted into containers or further stages of growth. In some embodiments, the first growing facility comprises a "soil room," for supplying soil to a seeding line, for example, or a transplant line. In some embodiments, for example, an automatic planting system is used to sow seeds into plug trays. These trays can be loaded onto carts, and transported into a germination chamber, where the seeds are germinated. In some embodiments, the germination chamber serves as a plug grow room, or serves as a separate germination chamber grow room, separate from a plug grow room.

In some embodiments, after germination in a germination room or a period of initial growth in a nursery grow room, (e.g., until after the plant is established enough, or "hardy"), the plant is transferred to a greenhouse. In some embodiments the plant in a greenhouse is kept under natural sunlight until close to harvest for transportation or sale. In some embodiments, the plant is transferred to a finishing growing facility for finishing in a controlled environment grow room as discussed above. Advantageously, the combination of the controlled and natural environment described above allows a producer to control 100% of the growing environment when the plant is young, fragile, etc., and subsequently utilize natural solar energy and a natural environment once the plant is more established and mature. This system can also make use of the advantages previously discussed with reference to finishing the plant in a growing facility near to the customer.

As described above, controlling the environment in the plug and nursery stage improves the quality and consistency of the plant. In some embodiments, a plant grown in a method or system of the invention has an improved characteristic as compared to a plant grown using no finishing and no LED exposure, wherein the characteristic is selected from the group consisting of: color (e.g., darker green), stem thickness (e.g., thicker stems), plant strength (e.g., increased rigidity), leaf thickness (e.g., thicker leaves), leaf size (e.g., larger leaves), height (e.g., taller), weight (e.g., heavier), aromatic oil content (e.g., more aromatic), chlorophyll content (e.g., increased chlorophyll), vitamin and/or nutrient content (increased vitamins and/or nutrients, e.g., increased vitamin E, beat-carotene, lutein, vitamin C, or combinations thereof), antioxidant content (e.g., increased antioxidants), or any combination thereof. In some embodiments, a plant grown in a method or system of the invention has increased cold resistivity, better shelf life, decreased product shrinkage, or a combination thereof as compared to a plant grown using no finishing and no LED exposure. Qualitatively, a plant grown in a method or system of the invention can exhibit increased flavor as compared to a plant grown using no finishing and no LED exposure. Other improvements may include thicker and darker green leaves, thicker and stronger stems, increased aromatics, increased cold resistivity, better shelf life, and decreased product shrinkage. These improvements in plant quality indicators are coupled with reduced cooling times and improved shelf life.

In some embodiments, the combined grow room/greenhouse phase of the plant's growth reduces the overall seed-to-finished-product time by about 1 day to about 30 days, about 1 day to about 10 days, about 2 days to about 5 days, or about 2 days to about 3 days in the summer and up to over about 1 week, over about 2 weeks, up to about 3 weeks, or up to about 4 weeks in the winter.

The above benefits further make use of the consolidation of transportation and logistical/supply chain advantages of the satellite plant finishing room as described above, and can improve quality, increase consistency, reduce grow time, and allows for a more efficient multi-site distribution system.

As referenced above, in some embodiments, a plug tray is placed in a germination chamber after sowing. In some embodiments, the germination chamber is maintained at 50-90°F, 60-80°F, 60-75°F, 60-65°F, 65-75°F, or 70-72° F. In some embodiments, relative humidity in the germination chamber is controlled to 30-90%, 40-80%, 50-70%, or 85-100% relative humidity. In some embodiments, the germination chamber is kept dark. In some embodiments, the germination chamber has no or minimal lights, has no or minimal windows, or a combination thereof. In some embodiments, the plant is placed in a germination chamber for about 2 to 15 days, for about 2 to 10 days, or for 2, 3, 4, 5, 6, 7, 8, 9, or 10 days, or more. Time spent in the germination chamber can vary by plant variety. Representative time spent in a germination chamber is shown for representative plant varieties in the chart below.

| Variety | Days in Germination Chamber |
|---|---|
| Basil | 3 |
| Cilantro | 5 |
| Parsley | 8 |
| Dill | 4 |
| Oregano | 4 |
| Sage | 4 |
| Thyme | 3 |

In some embodiments, the plug tray is removed from the germination chamber after a predetermined time (e.g., when the seeds have germinated), and is placed in a cart. In some embodiments, the cart is watered overhead or through an integrated irrigation system and then transported (e.g., wheeled by an operator or autonomously) into a plug grow room. In some embodiments, the plug grow room is maintained at 50-90°F, 60-80°F, 60-75°F, 60-65°F, 65-75°F, or 65-73° F. In some embodiments, relative humidity in the germination chamber is controlled to 30-90%, 40-80%, 50-70%, 85-100%, or 65-85% relative humidity.

In some embodiments, a cart of the invention comprises one or more adjustable shelves (e.g., levels) on which the plug trays or plants are placed. In some embodiments, the cart comprises 1, 2, 3, 4, 5, 6, 7, 8, 9, 10, or more levels that can be adjusted based on plant growth (e.g., the distance between the levels can be increased or decreased to accommodate plant growth). In some embodiments, from one to ten or from two to eight levels are used while the cart is in the plug grow room. Additional shelves can be included in the carts as needed and depending on plant variety and growing space restrictions. As noted above, the germination chamber can be configured to serve as a plug grow room. In some embodiments, a cart comprising the plug tray is positioned or "parked" in a stall in the plug grow room, wherein the stall is arranged in a linear or grid arrangement. The use of the cart and stall system increases efficiency and organization, and allows easy positioning of the carts (and in turn the plants) for optimum growth conditions. In some embodiments, the cart and/or stall is equipped with LED lights as described above. In some embodiments, the cart and/or stall includes an integrated sub-irrigation system. In the plug grow room, the LED lights applied can comprise the ranges and intervals of wavelength and intensity along with duration as described herein. In some embodiments, the LED light applied in the plug grow room is between 440 to 710 nm and is applied for 18 hours followed by a dark period of 6 hours. In some embodiments, the plug is monitored and sub-irrigated as needed, e.g., each morning. Time spent in the plug grow room can vary by plant variety. Representative time spent in a plug grow room is shown for representative plant varieties in the chart below.

| Variety | Days in Plug Grow Room |
|---|---|
| Basil | 8-9 |
| Cilantro | 8 |
| Parsley | 9 |
| Dill | 8 |
| Oregano | 14 |
| Sage | 10 |
| Thyme | 13 |

In some embodiments, a plug is transported from a plug tray into an individual pot. In some embodiments, an automatic transplanting system is used to transport a plug from a plug tray into an individual pot. In some embodiments, the pot is placed in a tray and is watered overhead.

Once transplanted, in some embodiments the tray is placed on a cart and the cart is placed in a nursery grow room as in prior stages. The cart can be the same cart as used in the previous stages. In some embodiments, fewer levels of the carts are used in the nursery grow room as compared to the number of levels used in the plug grow room, in order to accommodate plant growth. In some embodiments, seven levels, or less than seven levels are used while the cart is in the nursery grow room. In some embodiments, the nursery grow room is maintained at 50-90°F, 60-80°F, 60-75°F, 60-65°F, 65-75°F, or 64°-77°F. In some embodiments, relative humidity in the nursery grow room is controlled to 30-90%, 40-80%, 50-70%, 85-100%, or 65-85% relative humidity. Similar to the plug grow room, the carts can be parked in stalls that are equipped with LED lights and a sub-irrigation system.

In some embodiments, the nursery grow room comprises LED lights comprising the ranges and intervals of wavelength and intensity along with duration as described herein. In some embodiments, the LED light applied in the nursery grow room is between 440-710 nm and is applied for 18 hours followed by a dark period of 6 hours. In some embodiments, the plant is monitored and sub-irrigated as needed, e.g., each morning. Time spent in the nursery grow room can vary by plant variety. Representative time spent in a nursery grow room is shown for representative plant varieties in the chart below.

| Variety | Days in Nursery Grow Room |
|---|---|
| Basil | 8-9 |
| Cilantro | 8 |
| Parsley | 9 |
| Dill | 8 |
| Oregano | 9 |
| Sage | 9 |
| Thyme | 9 |

After the period in the nursery grow room, in some embodiments, the pot is removed from the nursery grow room, and is placed on flood and ebb benches in a greenhouse, for example, or is placed in a moving gutter system in a greenhouse. In some embodiments, the greenhouse is in the same growing facility as the prior stages. In some embodiments, the greenhouse is a remote facility from the prior stages. Time spent in the greenhouse can vary by plant variety, ambient environmental conditions, season of the year, etc.

As described herein, a plant being transferred to a satellite finishing room is removed from the greenhouse up to about two days prior to the previous harvest date and placed in a tray, for example, and can be spaced apart every other opening to allow for further space for growing outward. Carts loaded with the filled trays can be loaded onto an environmentally controlled truck, for example, for transportation to the satellite finishing rooms. In some embodiments, the truck environment is be controlled, for example at less than 80°F, less than 70°F, less than 60°F, less than 50°F, less than 40°F, or about 60°F, for example. Similar to the plug grow room and the nursery grow room, the carts can be parked in a stall that is equipped with LED lights and a sub-irrigation system. In some embodiments, fewer levels of the carts are used in the satellite finishing room as compared to the number of levels used in the grow rooms in order to accommodate plant growth. In some embodiments, five levels, or less than five levels are used while the cart is in the satellite finishing room. After the plants are removed from the truck, they can be cooled prior to finishing, or prior to packaging/shipping. The plants can be cooled, for example, for about 4 hours in a facility at a controlled temperature, for example, about 55°F.

When ready for shipment, the plants can be boxed (for example, in a tray) and palletized (e.g., loaded and stacked on pallets that are wrapped for securement to the pallet), and then the pallets are delivered to the customer.

In some embodiments, the plants (e.g., potted herbs) can be loaded onto trays or multi-layer carts which are moved onto a transportation apparatus. In some embodiments, the transportation apparatus can be a truck, e.g., a refrigerated truck. In embodiments, the transportation apparatus can include a tray, cart, bin, and conveyor. The transportation apparatus can be partially automated in some embodiment. In some embodiments, the transportation apparatus can be fully automated. In some embodiments, the transportation apparatus is configured to depart the first growing facility for a second growing facility, such as an integrated packing and growing warehouse in a regional location or multiple locations. Plants can be removed from the first growing facility (e.g., main production greenhouses) some time prior to the previous harvest date and placed in nursery trays spaced for further grow out or finishing. The finishing can occur on the transportation apparatus or in a second growing facility. Finishing is a stage of growth of the plant such that it is ready for sale, which varies depending on the types of plants and the desired traits.

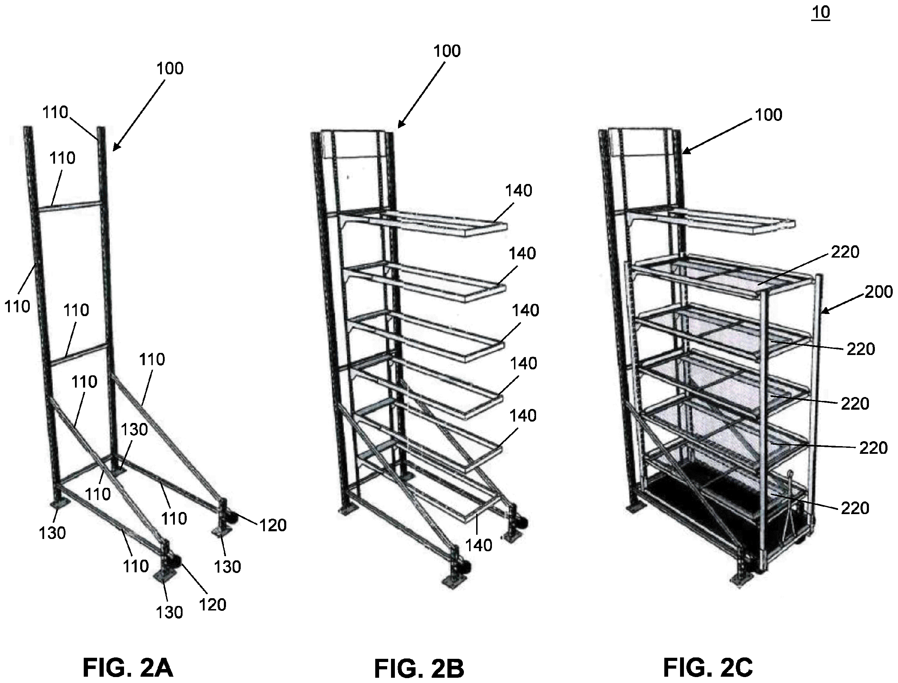

As shown in FIG. 2A-C, the system can include a cart and stall system 10. The cart and stall system 10 can include stall 100, including members 110 which can be connected together and comprise structure of stall 100. Members 110 can be adjustably configurable, and allow for flexibility in design. In some embodiments, multiple stalls 100 can be arranged in a linear or grid arrangement, and can be connected together. An example arrangement of carts 200 and stalls 100 is shown in FIG. 2. Stall 100 can include feet 130, which can locate the stalls in the various grow rooms, chambers, greenhouses, transportation systems, etc., described herein. Stall 100 can further include casters 120 for ease of transportation and reconfiguration of the cart and stall system 10.

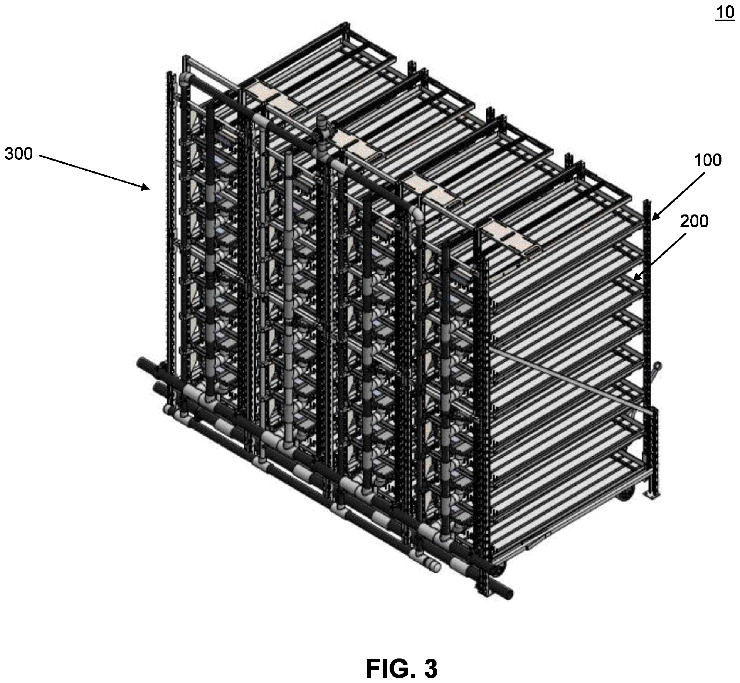

Cart and stall system 10 can further include cart 200, including shelves 220, which can be used to support and locate plants as described herein. Shelves 220 can be adjustably configurable, for example vertically, or removable as needed. Carts 200 can include similar members as members 110 of stalls 100 that can be adjustably configurable, and allow for flexibility in design. As described, carts 200 can be positioned or "parked" in stalls 100 in the various growing facilities and locations. The use of the cart and stall system 10 increases efficiency and organization, and allows easy positioning of the carts (and in turn the plants) for optimum growth conditions. The carts 200 and/or stalls 100 can be equipped with LED light systems 140 as described above (for example, including three light bars per shelf (not shown), of about 48" that are capable of emitting wavelengths eabout 440 to 710 nm), and can each include a sub-irrigation system 300 (shown in FIG. 3, for example) integrated in their assembly. In some embodiments, there can be additional irrigation systems and LED lights installed in the various grow rooms, chambers, transportation systems, etc.

In some embodiments, the finishing period can be less than one hour, 1 hr to 24 hrs, 5 days, 1 day to 7 days, 1 day to 14 days, or 1 day to 30 days.

Carts can be loaded in some embodiments with filled nursery trays and each cart can be loaded onto a refrigerated truck for transportation to the second growing facility. In embodiments, the need to remove field heat from plants is reduced because the plants might not be sleeved prior to transporting from the first growing facility to the second growing facility and thus are less susceptible to the formation of condensation on the foliage. In some embodiments, temperature differentials can be controlled such that the plants are transported matching closely the first growing facility temperature. Plants can be grown, e.g., in 8 cm square pots and be harvested from the first growing facility. In some embodiments, the growth trays can be the same as the transportation trays. In some embodiments, the growth of the plant is initiated in the transportation apparatus. The trays can be placed onto the shelves of a transportation apparatus. The carts can be stored in a temperature and humidity controlled environment prior to loading onto the transportation apparatus such as a climate controlled truck to be transported to a second growing facility such as a pack house or distribution center.

The second growing facility can be one of a plurality of second growing facilities. Upon arrival at the second growing facility, in some embodiments the plants can be finished. In some embodiments, the second growing facility can include at least one of a pack house, distribution center, and growing facility. The plants can be placed onto flood and ebb benches at the second growing facility in some embodiments. For example, the 8 cm pots can be arranged in a plant density of 4-8 plants, 5-7 plants, or 5.7 plants per square foot or 50 to 70, 55 to 65, or 62 plants per square meter on the flood/ebb benches.

The second growing facility can include LED growth chambers. In some embodiments, the second growing facility can be an integrated regional warehouse, and can include LED growth chambers as satellite plant finishing rooms for plants. The second growing facility can be a fully enclosed and temperature controlled grow chamber where the plants can be placed on flood and ebb benches under a calibrated and timed LED, or LED lighting array. The LED or LED lighting array can be built to deliver 100% usable light in the different wavelengths to continue to grow the plants either with or without natural sunlight for 1 and 30 days, depending on the type of plant. The plants in some embodiments can be housed in the second growing facility for 1 to 30 days. They plants can be irrigated with nutrients and fertilizer (including organic nutrients) in an enclosed pump and return system in some embodiments.

During the time in the second growing facility (e.g., LED growth/finishing chamber), the plants can increase qualitative and quantitative characteristics, and for example can become much stronger, darker and more aromatic than is possible in any single growing facility or single greenhouse process. The resulting product can exhibit much higher aromatic oil content and can be superior in habit to even the most ideal naturally grown outdoor plants. Cold-chain resistance and shelf life can also be considerably improved in some embodiments. Plants can be exposed to LED light for 1 day to 30 days. In some embodiments, the LED light can be applied to the plant for 12 hours to 23 hours, 15 hours to 20 hours, or 18 hours, followed by a dark period of 1 hours to 12 hours, 4 hours to 9 hours, or 6 hours, where the LED light is not applied to the plant. These on/off cycles can be varied according to the type of plant, season, status of the first growing facility, status of the second growing facility, production supply, or customer demand, for example. In some embodiments, the plant can be exposed to LED light for 18 hours, followed by a 6 hour dark period. LED lights can be mounted above the leaf canopy, such that uniform light distribution is achieved.

Light intensity of 50-900 micromoles per cm² per sec, 200 to 260 micromoles per cm² per sec, or 190-200 micromoles per cm² per sec can be applied. In some embodiments, LED light can include blue light of 440 nm to 495 nm and red light of 615 nm to 750 nm. In some embodiments, LED light can include blue light of 450 nm to 495 nm and red light of 620 nm to 750 nm. In some embodiments, LED light can include blue light of 450 nm and red light of 625 nm and 660 nm. In some embodiments, the LED light can include green light of 495 nm to 570 nm, e.g., 530 nm. The LED light can further include yellow and orange light, and/or white light. The LED light can be 10% to 30% blue light and 70% to 90% red light. The LED light can be 10% to 20% blue light and 80% to 90% red light. For example, the LED light can be 14% blue light and 79% red light. In some embodiments, the LED light can be 14% blue with a wavelength of 450 nm Royal Blue, 7% Green/White with a wavelength of 530 nm Green, and 79% red light with a wavelengths of 625 nm Red and 660 nm Deep Red. In some embodiments, 1-10% of light in the green, yellow, orange wavelengths can be applied. An LED light can be configured to emit a wavelength of 380 to 750 nm. The LED can include red (620-670 nm) and blue (450-490 nm) wavelengths. In some embodiments, a portion of green and more blue towards white wavelengths can be applied.

When the LED light not applied in the second growing facility, the temperature in the second growing facility can be 60°F to 65°F. When the LED is applied, the temperature in the second growing facility can increase to 70°F to 80°F, for example to 74°F. Temperature of the second growing facility can be controlled to be 50-90°F, 60-80°F, 60-75°F, 60-65°F, or 65-75°F.

Relative humidity can be controlled to 30-90%, 40-80%, or 50-70%.

In some embodiments, a single variety of plant can be assigned to one second growing facility and a separate variety of plant can be assigned to a separate second growing facility. In other embodiments, multiple varieties of plants can be finished at the same second growing facility, and thus experience the same finishing conditions.

Other conditions within the second growing facility can be controlled to promote plant finishing. For example, in some embodiments, carbon dioxide can be maintained to a minimum level of 100 ppm to 350 ppm. Plants can be irrigated when the moisture content of the growing media drops below a certain percentage, for example 50%. In some embodiments, the fertilizer solution can be based on the time of the year, growth-rate, deficiencies, etc.

The plants in the invention can be, e.g., herbs, food plants, or flowers. Herbs can include culinary herbs, e.g., basils (Genovese, purple, lemon, and Thai), cilantro, parsley, dill, oregano, thyme, sage, mint, rosemary, and chives. Food plants can include leafy greens, e.g., lettuce, cabbage, watercress, wheat grass, catnip, kale, mustard greens, dandelion, chard, and beet greens. The plants can be therapeutic plants, e.g., marijuana, Echinacea, ginseng, mint, and other medicinal plants.

As daily orders arrive at each regional facility in some embodiments, the plants can be taken from the second growing location area where LED light is applied (e.g., growing chamber(s)) and can enter a packaging, boxing and assembly operation. In some embodiments, the boxed final product is loaded on a second transportation apparatus (e.g., outbound truck) that can be dedicated or include other product lines to customers. These methods and systems can produce a far superior product and can be fully sustainable and operationally exceeding efficient. These methods are an improvement over the prior model which dictated a need for full regional greenhouses in order to grow, pack and deliver fresh culinary herbs. For example, out of a single hub greenhouse first growing location in Harrisonburg Virginia, it will now be possible to produce and deliver regional grown culinary herbs from New England to Florida to Texas to Chicago and all points in between with exactly the same freshness and unmatched quality regardless of distance and or location. This is both a first for the herb industry and also groundbreaking for the greenhouse growing industry as it represents a completely new process and resulting dramatically improved product quality.

In some embodiments, there is a positive difference of 1-10%, 10-50%, 50-100% between the stem height of a non-treated plant and the taller treated plant that is allowed to finish growing in a second growing facility while exposed to the finishing conditions. In some embodiments, there is a positive difference of 1-10%, 10-50%, or 50-100% between the stem width of a non-treated plant and the taller treated plant that is allowed to finish growing in a second growing facility while exposed to the finishing conditions.

In some embodiments, plants grown using the methods or systems can display an increase in chlorophyll of 5-110%, 5-45%, or 10-35% in a treated plant that is allowed to finish growing in a second growing facility compared to a non-treated plant.

In some embodiments, Vitamin E can increase from 5-100%, 5-90%, or 5-50% in a treated plant that is allowed to finish growing in a second growing facility compared to a non-treated plant. Beta-Carotene, Lutein, and Vitamin C increased similar amounts. Other valued contents such as Zeaxanthin (mcg/serving), Polyphenols (g/serving), or Volatile Oils (mg/serving) can increase 5-100%, 5-90%, or 5-50% in a treated plant that is allowed to finish growing in a second growing facility compared to a non-treated plant.

### EXAMPLES

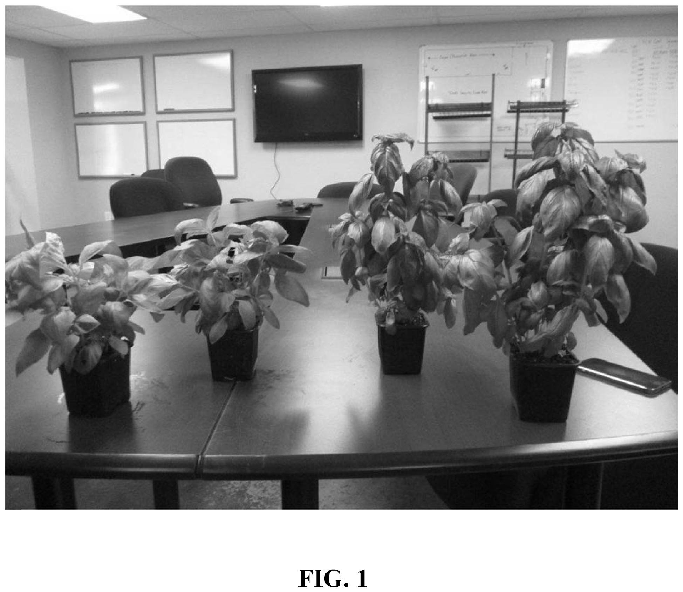

FIG. 1 shows a representative comparison between two basil plants on the left that have not been finished with the claimed methods or systems and two basil plants on the right that have been finished with the claimed methods or systems. The plants produced with these methods or systems exhibit a stronger, darker green color. As shown in the figure, stem thickness, height, leaf shape and surface area, are shown to have dramatically increased. Qualitatively, these plants exhibit increased flavor. Other improvements observed include thicker and darker green leaves, thicker and stronger stems, increased aromatics, increased cold resistivity, better shelf life, and decreased product shrinkage.

Stem height and thickness/width tests were conducted over three trials, with three treated plants and three untreated plants used in each trial. The test results addressed the comparison of three plants harvested from the greenhouse as normal (without treatment) and three plants harvested from the greenhouse 5 days early and spending the remaining five day in a second growing location including the LED chamber (with treatment). The resulting stem heights and widths are measured. Plant height is measured by assigning numbers to test plants and measuring the tallest point in the foliage from the level of the rim of the pot both before and after the finishing stage. Measurements were taken in millimeters and then averaged by adding all data points per pot and dividing by the number of plants in the corresponding section. These data are compared to measurements taken of plants of the same age held at room temperature with no LED treatment. Results are described in Table 1 below:

| **Table 1. Stem Thickness and Height Examples** | | | | |
|---|---|---|---|---|
| **Variety** | **Average % Difference between Treated and Untreated** | | **Max % Difference between Treated and Untreated** | |
| **Genovese Basil** | *Height* | | *Height* | |
| | | 13.87 | | 34.15 |
| | *Width* | | *Width* | |
| | | 16.59 | | 59.52 |
| **Cilantro** | *Height* | | *Height* | |
| | | 4.06 | | 27.27 |
| | *Width* | | *Width* | |
| | | 15.43 | | 88.89 |
| **Parsley** | *Height* | | *Height* | |
| | | 27.52 | | 65.22 |
| | *Width* | | *Width* | |
| | | 13.84 | | 70.45 |
| **Dill** | *Height* | | *Height* | |
| | | 16.04 | | 46.67 |
| | *Width* | | *Width* | |
| | | 10.59 | | 30.24 |
| **Oregano** | *Height* | | *Height* | |
| | | 9.58 | | 76.47 |
| | *Width* | | *Width* | |
| | | 11.94 | | 86.44 |
| **Thyme** | *Height* | | *Height* | |
| | | 21.35 | | 2585.14 |
| | *Width* | | *Width* | |
| | | 7.61 | | 36.84 |
| **Sage** | *Height* | | *Height* | |
| | | 4.79 | | 38.89 |
| | *Width* | | *Width* | |
| | | 25.21 | | 66.49 |
| **Mint** | *Height* | | *Height* | |
| | | 5.86 | | 28.70 |
| | *Width* | | *Width* | |
| | | 10.85 | | 36.65 |
| **Rosemary** | *Height* | | *Height* | |
| | | 1.07 | | 21.43 |
| | *Width* | | *Width* | |
| | | 9.02 | | 34.83 |
| **Chives** | *Height* | | *Height* | |
| | | 6.76 | | 28.00 |
| | *Width* | | *Width* | |
| | | 0.60 | | 38.21 |

Plant Color and/or Chlorophyll Content was assessed using digital photography in a location with controlled lighting and background as well as a handheld chlorophyll test device known as the atLEAF. Test plants were assigned numbers and photographs are taken of each plant prior to entering into the second growing facility (e.g., LED chamber). The 6 varieties used in this trial were selected because the leaf size is conducive to use of the atLEAF+ (made by FT GREEN LLC, of Wilmington, Delaware) handheld device. This device noninvasively measures the relative chlorophyll content of the plant. Plant relative chlorophyll concentration is measured by inserting a leaf into the device aperture and using optical density difference at two wavelengths (660nm and 940nm).

The chlorophyll test procedure used was as follows:
1. Collect 6 plants of each of 6 varieties (basil, cilantro, parsley, sage, mint, oregano)
2. Move sample plants to a cart outside second growing facility
3. Tag one leaf on each plant using an Avery 12204 white tag
4. Slide the leaf tip of the tagged leaf into the slot on the atLEAF+ meter and take 5 measurements, moving the meter slightly as measuring to account for the contours of the leaf
5. Place the plants in the second growing facility LED chamber for the described 5 day treatment time
6. Remove plants from the second growing facility LED chamber and place them on a cart outside of the second growing facility LED chamber
7. Repeat measurements post-treatment using the procedure described in step 4

Certain Antioxidant and Vitamin levels were tested for including types of antioxidants that are believed to have positive effects on human health. These antioxidants included; Vitamin C, Vitamin E, Carotenoids, and Phenols. Samples of plant tissue from each herb/green were analyzed in a laboratory before and after the five day duration in the second growing facility. Aromatic oil content was measured by laboratory testing. Samples of plant tissue from each herb/green were analyzed in a laboratory before and after the five day duration in the second growing facility. Other antioxidants, vitamins, and compositions tested for included Vitamin E, b-Carotene, Lutein, Zeaxanthin, Vitamin C, Polyphenols) and the Volatile Oils (e.g., aromatic oils and essential oils).

To test for Vitamin C, the tester used an HPLC/UV/C18 column system, methanol, ascorbic acid (Sigma), 0.05 M acetate buffer pH 3.8-4.0, ascorbic acid standard solution: 10-200 ppm. AOAC and USP reference were used. The samples were prepared directly in buffer at concentration of 1-10 mg/mL. This sample was then diluted with buffer to appropriate concentration for HPLC analysis. The sample was ground and composed. A portion of the sample was weighed and extracted with acetate buffer as above. Samples were then filtered through a membrane prior to HPLC analysis. Samples of 20 microliters were injected into HPLC equipped with C18 column at 25 C, UV detector at 280 nm under isocratic condition of 2-3% methanol in water. Data were then collected and analyzed using a chromatography workstation based on external standard calibration method.

To test for Vitamin E and Tocopherols, the tester utilized a method developed based on USP and AOAC methods with modifications using GC-FID with Capillary column. The tester used a GC system equipped with FID, DB-5 Column or equivalent, Injector, Ethanol, 50% KOH, Hexane or Chloroform, Standards of all forms of Tocopherols from Sigma. According to the method used, Alpha-Cholestane from Sigma may be used as IS. Standards and concentrated vitamin E samples were prepared directly in hexane, samples containing oils were saponified and then extracted into ethyl ether and exchanged to hexane in final preparation. Other samples can be prepared as oil-based samples or suspended in DMSO and then extracted into hexane. In both cases, antioxidant of ascorbic acid and BHT are included. IS is added at concentration of 200 ppm in the final preparation for the internal standard calibration method. 1 or 2 microliters of the final extract were injected into a GC equipped with DB-5 capillary column and FID. A temperature gradient was run for separation and elution. Data were collected and analyzed by a data workstation using external standard calibration method. An internal standard calibration method using alpha-Cholestane could also be used. For tocopherol succinate, two tests are performed: (1) do a direct extraction for identity of tocopherol succinate; (2) if the recovery is not good, perform a saponification and analyze tocopherol then back calculated as succinate form.

To test for Carotenenoids, including Lycopene, Lutein, Zeaxanthin and other carotenoids, the tester used as reference AOAC 16th and Anal. Chem. News & Features, 299A (1996). An HPLC/UV-VIS/C18 column system was used, along with methanol, ethanol, butylated hydroxytoulene (BHT), with standard solutions in ethanol. The samples were prepared in a strong fat-soluble solvent and then diluted into ethanol containing BHT. The concentration is determined by spectrophotometer for Beta-Carotene, Lutein, Lycopene, and their concentrations were calculated using their extinction coefficients prior to diluting with ethanol containing BHT as calibration standards. The samples were prepared as follows: Beta-Carotene, Lycopene or Lutein sample with high concentration were prepared directly in a fat-soluble solvent then diluted in ethanol containing BHT. A Micro-capsulated sample was dissolved in a DMSO:Water mixture then followed by an extraction with methylene chloride. The samples were diluted with ethanol. Samples were dissolved in DMSO then followed by an extraction with methylene chloride. The samples were diluted with ethanol. If esters of Lutein, Zeaxanthin and astaxanthin were present, a saponification procedure was used followed by extraction with methylene chloride. If carotenes were the only desired compounds, stronger saponification procedures could be used. Some samples could require a mixture of hexane: acetone: toluene: alcohol as described in AOAC. The samples were injected into an HPLC system and analyzed via an isocratic run with methanol or a gradient run with both acetone and water. Data were collected and analyzed using a chromatography workstation based on external standard calibration method. Because Lycopene is particularly unstable, internal standard calibration method could also be used. To test for volatile oils, FCC 9 page 1424 was used.

Exemplary test results are shown below in Table 2:

**Table 2**

| | Cilantro | | |
|---|---|---|---|
| | Un-Treated | Treated | **% Inc/Dec** |
| Vitamin E (IU/serving) | 35.52 | 28.8 | -18.918919 |
| b-Carotene (mg/serving) | 40.71 | 47.17 | 15.868337 |
| Lutein (mg/serving) | 74.997 | 79.779 | 6.37625505 |
| Vitamin C (mg/serving) | ------- | -------- | |

| | Dill | | |
|---|---|---|---|
| | Un-Treated | Treated | **% Inc/Dec** |
| Vitamin E (IU/serving) | 20.22 | 32.58 | 61.1275964 |
| b-Carotene (mg/serving) | 49.32 | 65.89 | 33.5969181 |
| Lutein (mcg/serving) | 91.648 | 111.379 | 21.5291114 |
| Vitamin C (mg/serving) | 1480 | 1677 | 13.3108108 |

| | Oregano | | |
|---|---|---|---|
| | Un-Treated | Treated | **% Inc/Dec** |
| Vitamin E (IU/serving) | 15.49 | 17.14 | 10.6520336 |
| b-Carotene (mg/serving) | 28.61 | 49.76 | 73.925201 |
| Lutein (mg/serving) | 54.062 | 81.514 | 50.7787355 |
| Vitamin C (mg/serving) | 1.17 | 1.65 | 41.025641 |

| | Rosemary | | |
|---|---|---|---|
| | Un-Treated | Treated | **% Inc/Dec** |
| Vitamin E (IU/serving) | 41.84 | 34.96 | -16.443595 |
| b-Carotene (mg/serving) | 13.49 | 17 | 26.0192735 |
| Lutein (mg/serving) | 25.018 | 27.525 | 10.020785 |
| Vitamin C (mg/serving) | 4.02 | 3.82 | -4.9751244 |

| | Chives | | |
|---|---|---|---|
| | Un-Treated | Treated | **% Inc/Dec** |
| Vitamin E (IU/serving) | 33.7 | 28.71 | -14.807122 |
| b-Carotene (mg/serving) | 34.55 | 32.83 | -4.9782923 |
| Lutein (mg/serving) | 53.967 | 57.696 | 6.9097782 |
| Vitamin C (mg/serving) | 734 | 912 | 24.2506812 |

| | Basil | | |
|---|---|---|---|
| | Un-Treated | Treated | **% Inc/Dec** |
| Vitamin E (IU/serving) | 45.53 | 26.8 | -41.137711 |
| b-Carotene (mg/serving) | 52.04 | 55.92 | 7.45580323 |
| Lutein (mg/serving) | 84.43 | 91.686 | 8.59410162 |
| Vitamin C (mg/serving) | 6.86 | 7.36 | 7.28862974 |

| | Parsley | | |
|---|---|---|---|
| | Un-Treated | Treated | **% Inc/Dec** |
| Vitamin E (IU/serving) | 19.37 | 20.39 | 5.26587506 |
| b-Carotene (mg/serving) | 36.99 | 43.44 | 17.4371452 |
| Lutein (mg/serving) | 57.308 | 64.046 | 11.7575208 |
| Vitamin C (mg/serving) | 196 | 183 | -6.6326531 |

| | Thyme | | |
|---|---|---|---|
| | Un-Treated | Treated | **% Inc/Dec** |
| Vitamin E (IU/serving) | 15.12 | 18.82 | 24.4708995 |
| b-Carotene (mg/serving) | 35.1 | 35.12 | 0.05698006 |
| Lutein (mg/serving) | 57.224 | 60.858 | 6.35048232 |
| Vitamin C (mg/serving) | 7.72 | 9.43 | 22.1502591 |

| | Sage | | |
|---|---|---|---|
| | Un-Treated | Treated | **% Inc/Dec** |
| Vitamin E (IU/serving) | 21.07 | 25.66 | 21.7845278 |
| b-Carotene (mg/serving) | 33.57 | 39.72 | 18.3199285 |
| Lutein (mg/serving) | 52.163 | 65.543 | 25.6503652 |
| Vitamin C (mg/serving) | 16.71 | 17.43 | 4.30879713 |

| | Mint | | |
|---|---|---|---|
| | Un-Treated | Treated | **% Inc/Dec** |
| Vitamin E (IU/serving) | 18.66 | 35.66 | 91.1039657 |
| b-Carotene (mg/serving) | 50.4 | 39.31 | -22.003968 |
| Lutein (mg/serving) | 74.747 | 61.317 | -17.967276 |
| Vitamin C (mg/serving) | 1.64 | 3.9 | 137.804878 |

Additional variations of the systems and methods described above are also contemplated.

Additional growth data is summarized below for plants grown in controlled environment plug grow rooms and nursery grow rooms. Exemplary test results for various plant varieties are shown below in Table 3:

**Table 3**

| LED Plug | Basil | Control | % over control | Cilantro | Control | % over control | Oregano | Control | % over control |
|---|---|---|---|---|---|---|---|---|---|
| Days to harvest date | 41 | 41 | | 39 | 40 | | 55 | 55 | |
| Height | 7.00 | 5.63 | 24% | 6.38 | 5.88 | 9% | 6.00 | 2.63 | 128% |
| Weight | 0.87 | 0.6 | 45% | 0.706667 | 0.633333 | 12% | 0.42 | 0.16 | 165% |
| Observations | The experiment had bigger leaves. | | | Note the control was 1 day older. | | | The experiment was a much more mature plant with bigger leaves. | | |
| | | | | | | | | | |

| LED Sat. | Basil | Control | % over control | Cilantro | Control | % over control | Oregano | Control | % over control |
|---|---|---|---|---|---|---|---|---|---|
| Days to harvest date | 50 | 50 | | 46 | 46 | | 77 | 77 | |
| Height | 8.25 | 8.25 | 0% | 6.63 | 6.25 | 6% | 5.50 | 5.25 | 5% |
| Weight | 1.20 | 1.16 | 3% | 0.84 | 0.69 | 22% | 0.67 | 0.6 | 12% |
| Observations | The experiment had darker green and thicker leaves, thicker stems, and was more rigid. | | | The experiment had darker green leaves and was more rigid. | | | The experiment had darker green leaves. | | |
| | | | | | | | | | |

| LED Plug + LED Sat. | Basil | Control | % over control | Cilantro | Control | % over control | Oregano | Control | % over control |
|---|---|---|---|---|---|---|---|---|---|
| Days to harvest date | 45 | 45 | | 43 | 44 | | 59 | 59 | |
| Height | 7.00 | 7 | 0% | 7.63 | 8 | -5% | 7.00 | 3.63 | 93% |
| Weight | 1.03 | 0.92 | 12% | 0.97 | 0.808333 | 20% | 0.48 | 0.2666667 | 79% |
| Observations | The experiment had darker green and thicker, larger leaves, thicker stems, and was more rigid. | | | The experiment had darker green leaves and was more rigid. Note the control was 1 day older. | | | The experiment had bigger and darker green leaves. | | |
| | | | | | | | | | |

| LED NS | Basil | Control | % over control | Cilantro | Control | % over control | Oregano | Control | % over control |
|---|---|---|---|---|---|---|---|---|---|
| Days to harvest date | 42 | 43 | | 44 | 44 | | 70 | 70 | |
| Height | 7.50 | 6 | 25% | 5.75 | 5.25 | 10% | 5.25 | 4.25 | 24% |
| Weight | 1.20 | 0.8 | 50% | 0.706667 | 0.488333 | 45% | 0.42 | 0.34 | 24% |
| Observations | The experiment had darker green and thicker leaves, thicker stems, and was more rigid. | | | The experiment was more mature with bigger leaves. | | | The experiment was more mature. | | |

| LED NS + LED Sat. | Basil | Control | % over control | Cilantro | Control | % over control | Oregano | Control | % over control |
|---|---|---|---|---|---|---|---|---|---|
| Days to harvest date | 46 | 47 | | 48 | 48 | | 73 | 73 | |
| Height | 7.50 | 7.88 | -5% | 6.5 | 5.88 | 11% | 5.25 | 4 | 31% |
| Weight | 1.38 | 0.96 | 44% | 1.005 | 0.628333 | 60% | 0.53 | 0.37 | 43% |
| Observations | The experiment had darker green and thicker, larger leaves, thicker stems, and was more rigid. Note the control was 1 day older. | | | The experiment had darker green leaves and was more rigid. | | | The experiment had bigger and darker green leaves and was overall bigger. | | |
| | | | | | | | | | |

| LED Plug + LED NS | Basil | Control | % over control | Cilantro | Control | % over control | Oregano | Control | % over control |
|---|---|---|---|---|---|---|---|---|---|
| Days to harvest date | 40 | 40 | | 36 | 36 | | 55 | 55 | |
| Height | 7.88 | 4.88 | 61% | 5.88 | 4.88 | 20% | 6.00 | 2.63 | 128% |
| Weight | 1.07 | 0.59 | 81% | 0.48 | 0.46 | 4% | 0.44 | 0.16 | 172% |
| Observations | The experiment had bigger leaves and was a much more mature plant. | | | The experiment had darker leaves. | | | The experiment was much more mature. | | |
| | | | | | | | | | |

| LED Plug + LED NS + LED Sat. | Basil | Control | % over control | Cilantro | Control | % over control | Oregano | Control | % over control |
|---|---|---|---|---|---|---|---|---|---|
| Days to harvest date | 44 | 44 | | 40 | 40 | | 59 | 59 | |
| Height | 8.25 | 5.25 | 57% | 6.25 | 6.25 | 0% | 6.25 | 3.63 | 72% |
| Weight | 1.27 | 0.68 | 87% | 0.61 | 0.54 | 13% | 0.61 | 0.2666667 | 128% |
| Observations | The experiment had darker green and thicker leaves, thicker stems, and was more rigid. | | | The experiment had darker green leaves and was more rigid. | | | The experiment had darker green leaves. | | |
| | | | | | | | | | |
| Total height average | | Basil | 23% | | Cilantro | 7% | | Oregano | 69% |
| Total weight average | | | 46% | | | 25% | | | 89% |

For the results above, the control plant was grown using no finishing, and applying no LED exposure. For the tables, the designation of "plug" or "LED plug" indicate that the plant compared to the control plant was grown using a plug grow room as described herein. For the tables, the designation of "Nursery", "LED Nursery", or "LED NS" indicate that the plant compared to the control plant was grown using a nursery grow room as described herein. For the tables, the designation of "LED Satellite" or "LED Sat." indicate that the plant compared to the control plant was grown using a satellite finishing room as described herein. The "+" contained in some charts indicates that a combination of the systems above were applied

A summary of the exemplary test results in Table 3 for various plant varieties are shown below as averages in Table 4:

**Table 4**

| **LED Plug** | **Average % over control** |
|---|---|
| Height | 54% |
| Weight | 74% |

| **LED Sat.** | **Average % over control** |
|---|---|
| Height | 4% |
| Weight | 12% |

| **LED Plug + LED Sat.** | **Average % over control** |
|---|---|
| Height | 29% |
| Weight | 37% |

| **LED NS** | **Average % over control** |
|---|---|
| Height | 19% |
| Weight | 39% |

| **LED NS + LED Sat.** | **Average % over control** |
|---|---|
| Height | 12% |
| Weight | 49% |

| **LED Plug + LED NS** | **Average % over control** |
|---|---|
| Height | 70% |
| Weight | 86% |

| **LED Plug + LED NS + LED Sat.** | **Average % over control** |
|---|---|
| Height | 43% |
| Weight | 76% |
| | |
| Total height average | 33% |
| Total weight average | 53% |

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.
Some embodiments of the invention are disclosed in the following numbered items:
1. A method of growing a plant, comprising:
   growing a plant from a seed, seedling, or immature plant in a first growing facility;
   transporting the plant to a second growing facility; and
   exposing the plant to a light emitting diode (LED) in the second growing facility.
2. The method of embodiment 1, further comprising finishing the growth of the plant in the second growing facility.
3. The method of any one of embodiments 1-2, wherein the first growing facility is a greenhouse, farm, warehouse, or industrial agricultural complex.
4. The method of any one of embodiments 1-3, wherein the plant is grown for 10 day to 60 days in the first growing facility.
5. The method of any one of embodiments 1-4, wherein the transporting can be by a truck, tray, cart, bin, or conveyor.
6. The method of any one of embodiments 1-5, wherein the second growing facility is a warehouse, pack house, or distribution center.
7. The method of any one of embodiments 1-6, wherein the second growing facility comprises an LED growth chamber.
8. The method of any of embodiments 1-7, further comprising finishing the growth of the plant in the second growing facility for 1 day to 30 days.
9. The method of any one of embodiments 1-9, wherein the LED emits a wavelength between 440 nm to 495 nm and a wavelength between 615 nm to 750 nm.
10. The method of any one of embodiments 7-8, wherein the exposing of the plant to the LED is for 12 hours to 24 hours followed by a dark period of 1 hour to 12 hours per day.
11. The method of any one of embodiments 1-10, wherein the LED exposure comprises 10% to 30% blue light and 70% to 90% red light.
12. The method of embodiment 11, wherein the LED exposure further comprises 1% to 10% green light.
13. The method of any one of embodiments 11-12, wherein the LED exposure further comprises yellow and orange light.
14. The method of any one of embodiments 11-13, wherein the LED exposure further comprises 1% to 10% white light.
15. A system for growing a plant, comprising:
   a first growing facility comprising an area configured to initiate growth of a plant or seed;
   a second growing facility comprising an area configured to allow finishing of the growth of the plant,
   wherein the finishing comprises exposing the plant to a light emitting diode (LED).
16. The system of embodiment 15, further comprising:
   a transportation apparatus,
   wherein the transportation apparatus transports the plant from the first growing facility to the second growing facility.
17. The system of any one of embodiments 15-16, wherein the plants from the first growing facility are provided to multiple second growing facilities.
18. The system of any one of embodiments 15-17, wherein the first growing facility is a greenhouse, farm, warehouse, or industrial agricultural complex.
19. The system of embodiment 16, wherein the transportation apparatus is a truck, tray, cart, bin, or conveyor.
20. The system of any one of embodiments 15-19, wherein the second growing facility is a warehouse, pack house, or distribution center.
21. The system of any one of embodiments 15-20, wherein the second growing facility comprises an LED growth chamber.
22. The system of any one of embodiments 15-21, wherein the LED emits a wavelength between 440 nm to 495 nm and a wavelength between 615 nm to 750 nm.
23. The system of any one of embodiments 15-22, wherein the LED exposure comprises 10% to 30% blue light and 70% to 90% red light.
24. The system of embodiment 23, wherein the LED exposure further comprises 1% to 10% green light.
25. The system of any one of embodiments 23-24, wherein the LED exposure further comprises yellow and orange light.
26. The system of any one of embodiments 23-25, wherein the LED exposure further comprises 1% to 10% white light.
27. A method of growing a plant, comprising:
   exposing a plant to a light emitting diode (LED) after a period of initial growth without LED exposure,
   wherein the LED exposure comprises a blue light having a wavelength between 440 nm to 495 nm and a red light having a wavelength between 615 nm to 750 nm.
28. The method of embodiment 27, wherein the LED exposure comprises 10% to 30% blue light and 70% to 90% red light.
29. The method of any one of embodiments 27-28, wherein the LED exposure further comprises 1% to 10% green light.
30. The method of any one of embodiments 27-29, wherein the LED exposure further comprises yellow and orange light.
31. The method of any one of embodiments 27-30, wherein the LED exposure further comprises 1% to 10% white light.
32. The method of any one of embodiments 1-14, further comprising exposing the plant to an LED in the first growing facility.
33. The method of any one of embodiments 1-14 or 32, wherein the first growing facility comprises one or more plug grow rooms, one or more nursery grow rooms, or combinations thereof.
34. The method of any one of embodiments 1-14 or 32-33, wherein the second growing facility comprises one or more plug grow rooms, one or more nursery grow rooms, or combinations thereof.
35. The method of any one of embodiments 27-31, wherein the LED exposure is in a first growing facility, a second growing facility, or both.
36. The method of embodiment 35, wherein the first growing facility comprises one or more plug grow rooms, one or more nursery grow rooms, or combinations thereof.
37. The method of embodiment 35 or 36, wherein the second growing facility comprises one or more plug grow rooms, one or more nursery grow rooms, or combinations thereof.
38. The system of any one of embodiments 15-26, further comprising exposing the plant to an LED in the first growing facility.
39. The system of any one of embodiments 15-26 or 38, wherein the first growing facility comprises one or more plug grow rooms, one or more nursery grow rooms, or combinations thereof.
40. The system of any one of embodiments 15-26 or 38-39, wherein the second growing facility comprises one or more plug grow rooms, one or more nursery grow rooms, or combinations thereof.

## Claims

1. A method of growing plants, comprising:
positioning a plurality of plants onto a plurality of trays;
loading the plurality of trays onto a movable cart in a plurality of layers, and positioning the movable cart in a first space configured to store the plurality of plants during a first stage of growth;
transporting the movable cart and the plurality of plants in the plurality of layers of trays to a second space configured to store the plurality of plants during a second stage of growth, wherein the second space comprises a cart receiving structure including a plurality of light emitting diodes (LEDs) and an irrigation system accessible to the plurality of layers of trays;
positioning the movable cart and the plurality of plants in the plurality of layers of trays within the cart receiving structure; and
applying LED exposure and irrigation to the plurality of plants in the plurality of layers of trays during the second stage of growth.

2. The method of claim 1, wherein the first space is a germination area and the second space is a nursery area.

3. The method of claim 1, wherein the LED exposure comprises the LEDs emitting light having a wavelength between 440 nm to 495 nm and light having a wavelength between 615 nm to 750 nm during the second stage of growth.

4. The method of claim 1, wherein the LED exposure comprises the LEDs emitting 10% to 30% blue light and 70% to 90% red light, and further comprises one or more of: 1% to 10% green light, yellow and orange light, and 1% to 10% white light.

5. The method of claim 1, comprising applying the LED exposure for a first period of time that is followed by a dark period during which the plurality of plants are not exposed to the LEDs or other light, wherein the first period is between 12 hours and 23 hours and the dark period is between 1 hour and 12 hours.

6. The method of claim 5, comprising exposing the plurality of plants to each the first period of time and the dark period once per day, wherein the first period of time and the dark period for between 2 days and 30 days.

7. The method of claim 1, comprising:
transporting the movable cart and the plurality of plants in the plurality of layers of trays to a third space comprising a green house configured to store the plurality of plants during a third stage of growth; and
unloading the plurality of plants in the plurality of layers of trays from the movable cart and arranging the plurality of plants in a plant density of four to eight plants per square foot.

8. A system for growing plants, comprising:
a movable cart configured to receive a plurality of plants in a plurality of layers of trays and to position said plants in a first space and a second space, wherein
the first space is configured to store the plurality of plants during a first stage of growth and the second space is configured to store the plurality of plants during a second stage of growth;
the second space comprises a cart receiving structure including a plurality of light emitting diodes (LEDs) and an irrigation system; and
the movable cart and the plurality of plants in the plurality of layers of trays are positionable within the cart receiving structure during the second stage of growth.

9. The system of claim 8, wherein the cart comprises shelves configured to store the plurality of plants in the plurality of layers of trays.

10. The system of claim 8, wherein the cart receiving structure comprises a stall system including connectable members that are adjustably configurable.

11. The system of claim 8, wherein the LEDs are capable of emitting wavelengths from about 440 nm to about 710 nm.

12. The system of claim 8, wherein the LEDs are configured to emit light having a wavelength between 440 nm to 495 nm and light having a wavelength between 615 nm to 750 nm during the second stage of growth.

13. The method of claim 8, wherein the LEDs are configured to emit 10% to 30% blue light and 70% to 90% red light and one or more of 1% to 10% green light, yellow and orange light, and 1% to 10% white light.

14. The system of claim 8, wherein the first space is a germination area and the second space is a nursery area.

15. The system of claim 8 wherein each of the plurality of cart receiving structures includes casters configured for transportation and reconfiguration of the plurality of movable carts and the plurality of cart receiving structures.
